# EUROPEAN PATENT SPECIFICATION

(11) **EP 3 644 336 B1**
(45) Date of publication and mention of the grant of the patent: **09.02.2022**
(21) Application number: 18837767.5
(22) Date of filing: 19.07.2018
(51) Int. Cl.: H01H 9/40, H01H 9/54, H01H 33/59, H01H 9/30

(54) **DIRECT-CURRENT ARC-EXTINGUISHING DEVICE**
GLEICHSTROM-LICHTBOGENLÖSCHVORRICHTUNG
DISPOSITIF D'EXTINCTION D'ARC À COURANT CONTINU

(30) Priority: 24.07.2017 CN 201710608043; 10.08.2017 CN 201710681425; 28.08.2017 CN 201710752610; 14.09.2017 CN 201710828462; 20.10.2017 CN 201710987367; 29.10.2017 CN 201711028608; 03.11.2017 CN 201711071590; 06.12.2017 CN 201711279281; 18.12.2017 CN 201711360342; 25.12.2017 CN 201711419656; 11.01.2018 CN 201810026942; 15.04.2018 CN 201810334791; 26.04.2018 CN 201810384250; 27.05.2018 CN 201810518236; 25.06.2018 CN 201810664507; 04.07.2018 CN 201810723029; 18.07.2018 CN 201810792433
(43) Date of publication of application: 29.04.2020
(73) Proprietor: Guo, Qiaoshi, Guangdong 511447 (CN)
(72) Inventor: GUO, Qiaoshi, Guangzhou Guangdong 511447 (CN)
(74) Representative: Sun, Yiming
(86) International application number: PCT/CN2018/096225
(87) International publication number: WO 2019/019949

(56) References cited:
- WO-A1-2013/098906
- WO-A1-2016/208968
- CN-A- 1 082 247
- CN-A- 102 723 700
- CN-A- 103 325 592
- CN-A- 105 185 623
- CN-A- 106 783 297
- CN-A- 106 847 582
- US-A1- 2015 022 928

## Description

### TECHNICAL FIELD

The present invention relates generally to arc extinguishing in the field of electrics, and more specifically, to a direct current arc extinguishing apparatus, which is suitable for quickly extinguishing arc of mechanical contacts such as mechanical switches, as well as extinguishing arc of other breakpoints such as fusing of fuse links, breakpoints between plugs and sockets, and breakpoints of wires.

### BACKGROUND

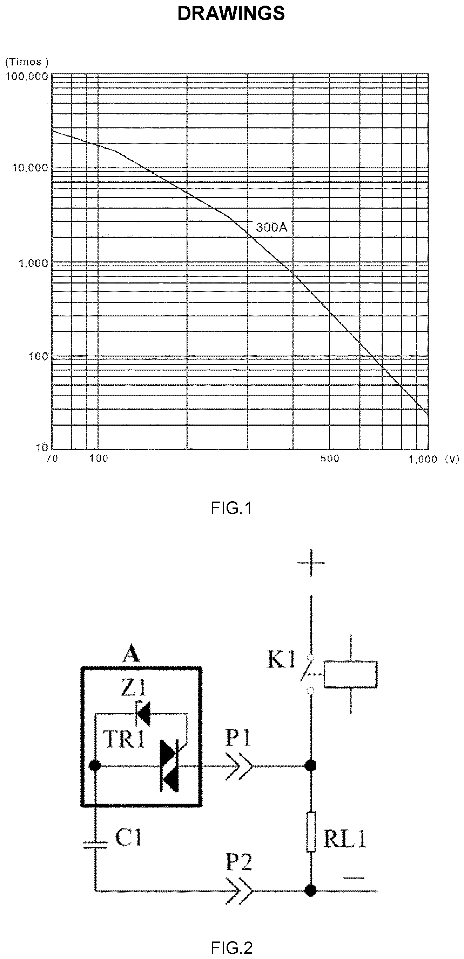

Currently, mechanical switches such as contactors (relays) are widely used in various direct current electric control systems such as new energy vehicles, rail transit, ships, etc., to on and off the loads. Because direct current has no zero point and its breaking arc is large, it has the shortcomings of high cost of mechanical switches (high voltage contactors) and short electrical life. As the breaking voltage of mechanical switch increases, its electrical life will be greatly reduced. FIG. 1 gives a diagram of a brand of high voltage contactor, which shows that the waveform of the breaking voltage (i.e., arc breaking voltage) is corresponding to its electrical life. The publication WO 2016/208968 A1 discloses a direct current arc extinguishing apparatus as described in the introductory portion of claim 1.

### SUMMARY

One of the objectives of the present disclosure is to solve the problem of short electrical life of mechanical switches in the existing direct current electric control systems and to provide a direct current arc extinguishing apparatus with high arc extinguishing effect, reduced breaking voltage (arc breaking voltage) of the mechanical switches and high arc extinguishing speed.

In accordance with the invention, a direct current arc extinguishing apparatus as set forth in claim 1 is provided. Further embodiments are inter alia disclosed in the dependent claims. In particular the mechanical switch requiring arc extinguishing is connected with a load in series, comprising a voltage detection and a capacitor, wherein the voltage detection switch is connected with the capacitor. When the breaking of the mechanical switch, the capacitor forms a discharge loop by the voltage detection switch and the load, which is used for breaking arc extinguishing of the mechanical switch.

The working principle for the breaking of the mechanical switch is as follows: The capacitor forms a discharge loop by the voltage detection switch and the load; then, the voltage across the load rises; and the electric field strength between contacts of the mechanical switch rapidly decreases, so as to achieve the purpose of quickly extinguishing arc of the mechanical switch (i.e., achieving the purpose of breaking without arc or breaking with extremely short arcing time).

The present disclosure is reasonable in design and has the advantages of high arc extinguishing effect, reduced breaking voltage of mechanical switch and high arc extinguishing speed.

### BRIEF DESCRIPTION OF THE DRAWINGS

FIG. 1 is a diagram showing the relationship between a waveform of breaking voltage and the electrical life of a brand of high voltage contactor.
FIG. 2 is a schematic diagram of a circuit of Embodiment 1 of a direct current arc extinguishing apparatus according to the present disclosure.
FIG. 3 is a schematic diagram of a circuit of Embodiment 2 of a direct current arc extinguishing apparatus according to the present disclosure.
FIG. 4 is a schematic diagram of a circuit of Embodiment 3 of a direct current arc extinguishing apparatus according to the present disclosure.
FIG. 5 is a schematic diagram of a circuit of Embodiment 4 of a direct current arc extinguishing apparatus according to the present disclosure.
FIG. 6 is a diagram of a delay circuit of voltage detection switch of a direct current arc extinguishing apparatus according to the present disclosure.
FIG. 7 is schematic diagram 1 of a package of a direct current arc extinguishing apparatus according to the present disclosure.
FIG. 8 is schematic diagram 2 of a package of a direct current arc extinguishing apparatus according to the present disclosure.
FIG. 9 is a schematic diagram of a circuit of Embodiment 5 of a direct current arc extinguishing apparatus according to the present disclosure.
FIG. 10 is a schematic diagram of a circuit of Embodiment 6 of a direct current arc extinguishing apparatus according to the present disclosure.

### DETAILED DESCRIPTION

Embodiment 1 of a direct current arc extinguishing apparatus of the present disclosure is shown in FIG. 2, where a mechanical switch K1 requiring the arc extinguishing is connected in series with a load RL1, and comprises a voltage detection switch A and a capacitor C1. The voltage detection switch A is connected with the capacitor C1. In the breaking of the mechanical switch K1, the capacitor C1 forms a discharge loop by the voltage detection switch K1 and the load RL1, and is used to extinguish arc when mechanical switch K1 is being broken.

Voltage detection switch (A): It is used for detecting the potential difference between the capacitor C1 and the load RL1. It comprises a thyristor TR1 (bidirectional thyristor) and a first semiconductor device Z1 (zener diode), and a gate of the thyristor TR1 is connected with a second anode of the thyristor TR1 by the first semiconductor device Z1.

Working principle: The mechanical switch K1 is closed, and then the voltage detection switch A is triggered to conduct and charge the capacitor C1. In the breaking of the mechanical switch K1, when the potential difference between the capacitor C1 end and the load RL1 is larger than the cut-in voltage of the voltage detection switch A (the potential difference is approximately equal to the potential difference between the two ends of the mechanical switch K1, and the cut-in voltage is determined by the first semiconductor device Z1); the thyristor TR1 is triggered to conduct; the capacitor C1 is discharged rapidly by the thyristor TR1 and the load RL1; the voltage across the load RL1 rises; the electric field strength between the contacts of the mechanical switch K1 rapidly decreases; and finally the purpose of quickly extinguishing the arc of the mechanical switch K1 is achieved.

In this embodiment, the voltage detection switch A adopts a bidirectional thyristor, which can be used for charging and discharging at the same time, and which has the advantages of simple circuit and low cost.

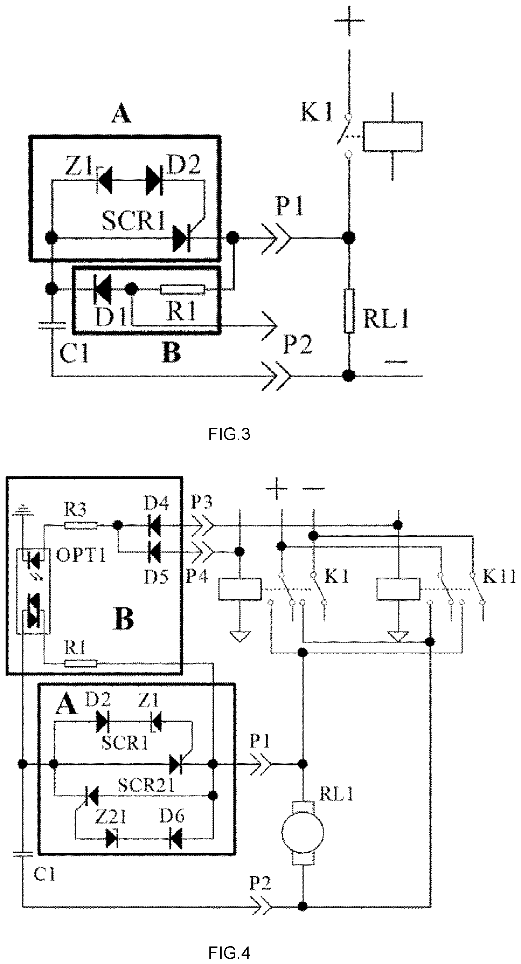

Embodiment 2 of a direct current arc extinguishing apparatus of the present disclosure is shown in FIG. 3, where the direct current arc extinguishing apparatus, comprising a voltage detection switch A, a capacitor C1 and a charging unit B. Here, the charging unit B is connected with the voltage detection switch A in parallel.

Voltage detection switch(A): It is used for detecting the potential difference between the capacitor C1 and the load RL1. It comprises a thyristor SCR1 (unidirectional thyristor), a first semiconductor device Z1 (zener diode) and a second diode D2. The gate of the thyristor SCR1 is connected with the anode of the thyristor SCR1 by the second diode D2 (for preventing the influence of reverse voltage on the circuit) and a first semiconductor device Z1.

Charging unit B: It normally comprises a first diode D1 and a first current limiting element R1 (resistor) in series. In some real-life situations, it may only comprise either the first current limiting element R1 alone or the first diode D1.

Working principle: The mechanical switch K1 is closed, and then the main loop power supply of the mechanical switch K1 charges the capacitor C1 by the charging unit B. In the breaking of the mechanical switch K1, when the potential difference between the capacitor C1 end and the load RL1 is larger than the cut-in voltage of the voltage detection switch A, the thyristor SCR1 triggers conduction; the capacitor C1 is discharged rapidly by the thyristor SCR1 and the load RL1; the voltage across the load RL1 rises; the electric field strength between contacts of the mechanical switch K1 rapidly decreases; and finally the purpose of quickly extinguishing the arc of the mechanical switch K1 is achieved.

In this embodiment, the voltage detection switch A adopts a unidirectional thyristor, which has the advantages of high current rise rate tolerance and good reliability. At the same time, it adopts a charging unit B, which has the advantage of small current impact when the mechanical switch K1 is closed.

In the foregoing two embodiments, the voltage detection switch A is a two-end circuit and a semi-controlled switch, which is composed of a semiconductor device and has the advantages of simple circuit and low cost. The charging power supply of capacitor C1 is provided by the connection node of mechanical switch K1 and load RL1, which has the advantages of not affecting the isolation voltage across mechanical switch K1 and no leakage current when mechanical switch K1 is normally open.

Embodiment 3 of a direct current arc extinguishing apparatus of the present disclosure is shown in FIG. 4. When it is necessary to control the forward and reverse arc extinguishing of the direct circuit motor, it is required to increase the number of relevant components and the enabling terminals appropriately. A working principle is the same as the forgoing embodiments, so it will not be repeated here.

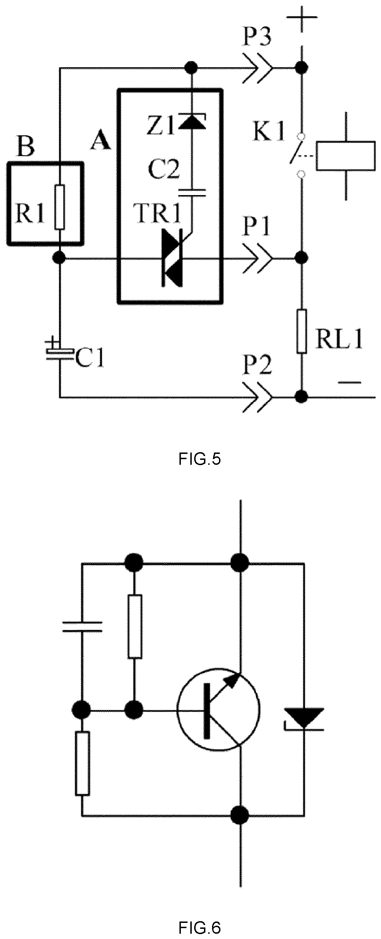

Embodiment 4 of a direct current arc extinguishing apparatus of the present disclosure is shown in FIG. 5, where the direct current arc extinguishing apparatus comprises a voltage detection switch A, a capacitor C1 and a first current limiting element R1 (a resistor and a charging unit B). Here, the capacitor C1 is connected with a power input port of a mechanical switch K1 by the first current limiting element R1, and the detection port of the voltage detection switch A is connected with the power input port of the mechanical switch K1 (it can be a contact bridge of the mechanical switch K1 when the mechanical switch K1 is in a bridge structure, and the second capacitor C2 can be optional according to requirements).

Voltage detection switch A: It is a three-end circuit and a semi-controlled switch. It adopts a capacitive coupling input signal and consists of thyristor TR1 (bidirectional thyristor or unidirectional thyristor), first semiconductor device Z1 (a Zener diode) and second capacitor C2. It is used to detect the potential difference between the two ends of mechanical switch K1 (or between contact bridge and static contact when it's the bridge structure, i.e., double breakpoint structure).

Working principle: When the power input port of the mechanical switch K1 is powered on, the direct current power supply charges the capacitor C1 by the first current limiting element R1; the mechanical switch K1 is closed; the capacitor C2 forms a discharge loop by the first semiconductor device Z1 and the mechanical switch K1. When the mechanical switch K1 bounces, the thyristor TR1 triggers conduction, and the capacitor C1 is discharged by the thyristor TR1 and the load RL1 to achieve the purpose of closing, bouncing and extinguishing the arc of the mechanical switch K1. In the breaking of the mechanical switch K1, when the potential difference across the mechanical switch K1 is greater than the cut-in voltage of the voltage detection switch A, the thyristor TR1 triggers conduction; the capacitor C1 is discharged rapidly by the thyristor TR1 and the load RL1; the voltage across the load RL1 rises; the electric field strength between the contacts of the mechanical switch K1 rapidly decreases; and finally the purpose of quickly extinguishing the arc of the mechanical switch K1 is achieved.

In Embodiment 4, the capacitor C1 may be an electrolytic capacitor. The capacitor C1 is connected to the power input port of the mechanical switch K1 by the first current limiting element R1. The detection port of the voltage detection switch A is connected to the power input port (or contact bridge) of the mechanical switch K1, which can extinguish arc for closing and bouncing of the mechanical switch K1. At the same time, after the capacitor C1 is fully charged, it has the advantage of no power consumption.

In the foregoing embodiments 1, 2, 3 and 4, the cut-in voltage of the first semiconductor device Z1 has to be greater than 3V (to be greater than the peak-to-peak value of the system ripple voltage), and equivalent device such as transient voltage suppressor, trigger diode, or varistor can be used. When the cut-in voltage of the thyristor is greater than 5V, the first semiconductor device Z1 is selected according to the needs of the operating conditions.

In the breaking of the mechanical switch K1, the gate of the thyristor does not need series resistor to limit current, so that the triggering speed of the thyristor can be improved, the loss of the charge of the capacitor before the thyristor being turned on can be reduced, and the capacity utilization rate of the capacitor can be improved. In the foregoing embodiments, the voltage detection switch A is in non-insulated isolation, and the charging power supply of the capacitor is provided by the non-electrical isolation (current limiting) of the main loop power supply of the mechanical switch, thus having the advantage of low cost.

In practical application, a delay circuit as shown in FIG. 6 or similar circuit can also be used for the first semiconductor device Z1 of the voltage detection switch A. Here, the voltage detection switch A is a delay on switch, which can ensure that the mechanical switch K1 has sufficient opening distance for arc extinguishing to prevent reignition when arc extinguished. The delay on time of the switch is preferably controlled to be greater than 100 microseconds.

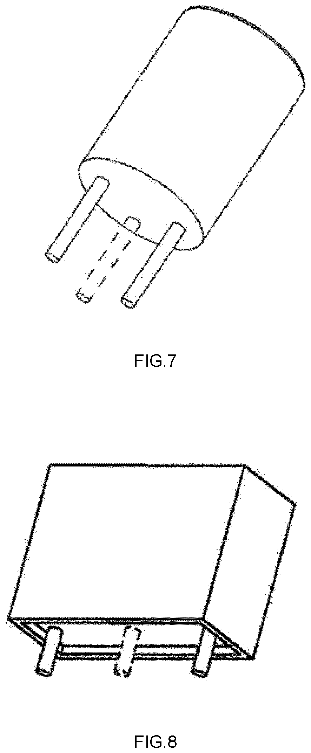

In order to facilitate popularization, standardization, batch production, and generalization, the foregoing embodiments can be packaged into a device using insulating materials, and can be in the form of two ports or three ports. The charging unit (or the first current limiting element) can be externally arranged according to the situation (three ports when externally arranged, with one port being an end point where a capacitor is connected with a power semiconductor device); it can also be built-in, adopting either a circular structure (shown in FIG. 7) or a square structure (shown in FIG. 8).

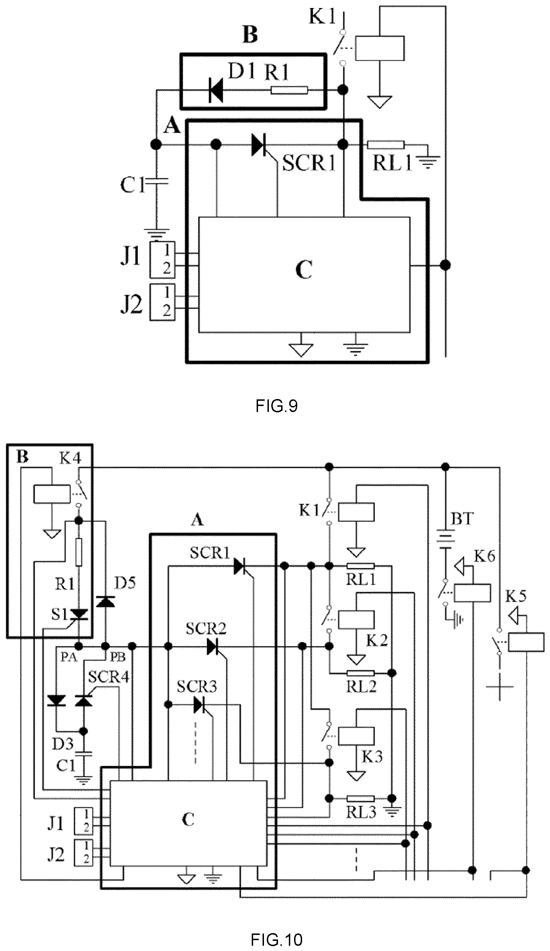

Embodiment 5 of a direct current arc extinguishing apparatus of the present disclosure is shown in FIG. 9, where the direct current arc extinguishing apparatus comprises a voltage detection switch A, a capacitor C1 and a charging unit B.

Voltage detection switch A: It comprises a control unit C and a power semiconductor device SCR1 (a semi-controlled device and a unidirectional thyristor). The voltage signal of the connection node of the mechanical switch K1 and the load RL1 is transmitted to the control unit C. The power semiconductor device SCR1 is connected with the control unit C. When the breaking of the mechanical switch K1, the power semiconductor device SCR1 is turned on; the capacitor C1 is discharged by the power semiconductor device SCR1 and the load RL1. Here, the J1 port is the control power supply port; J2 port is a communication port, which is used to receive control instructions and data, and to transmit the device and external status information (mechanical switch, load status, etc.). J1 and J2 are optional as required.

Control unit C: The built-in programmable device (microcontroller) can use A/D to collect the voltage of load RL1.The voltage signal of capacitor C1 is transmitted to control unit C for detecting the capacitance of capacitor C1. A control signal of the mechanical switch K1 is transmitted to control unit C (selected as required), or the control mode provided by control unit C (selected as required) with the control signal of the mechanical switch K1 can be adopted. It either stores or receives parameter related to the current of the load RL1. When the breaking operation of the mechanical switch K1, it is detected that the contact of the mechanical switch K1 is being broken, and the power semiconductor SCR1 is controlled to be turned on by time delay. The larger the current of the load RL1, the longer the delay time, and the delay time is proportional to the current of the load RL1. When the breaking operation of the mechanical switch K1, the larger the current of the load RL1 is, the larger the voltage difference between the capacitor C1 and the load RL1 is, until the power semiconductor device SCR1 is turned on, which is used for improving the discharge current of the capacitor C1 and improving the arc extinguishing effect.

Charging unit B: It is connected in parallel with power semiconductor device SCR1, where the connection node of mechanical switch K1 and load RL1 charges capacitor C1 by charging unit B. It is composed of either both a first diode D1 and a first current limiting element R1 in series, or the first diode D1 alone, or the first current limiting element R1. When the power semiconductor device SCR1 adopts a bidirectional thyristor, the charging unit B can be selected as required.

Working principle: The mechanical switch K1 is closed, the main loop power supply of the mechanical switch K1 charges the capacitor C1 by the charging unit B, and the control unit C detects the capacitance of the capacitor C1 according to the charging speed of the capacitor C1 (used for judging whether the capacitance of the capacitor is normal or not and optimizing the arc extinguishing control program according to the collected voltage signal data). When the breaking of the mechanical switch K1, the control unit C detects that the contact of the mechanical switch K1 is being broken, and delays the conduction of the power semiconductor device SCR1 (the delay is more than 100 microseconds, or measures to the voltage value set by the control unit C, and the delay time value is related to the breaking speed of the mechanical switch K1). Alternatively, when it is detected that the voltage signal of the connection node of the mechanical switch K1 and the load RL1 reaches a preset voltage value (or simultaneously accords with the time value set by the control unit C, which is related to the breaking speed of the mechanical switch K1), the power semiconductor device SCR1 is controlled to be conductive. The capacitor C1 is discharged rapidly by the power semiconductor device SCR1 and the load RL1; the voltage across the load RL1 rapidly rises; the electric field strength between the contacts of the mechanical switch K1 rapidly decreases; and finally the purpose of rapidly extinguishing arc of the mechanical switch K1 is achieved.

In Embodiment 5, the voltage signal of the connection node of the mechanical switch K1 and the load RL1 may be either a voltage signal across the load RL1, or a potential difference between the capacitor C1 and the load RL1 (i.e., a potential difference between both ends of the power semiconductor device SCR1). The voltage detection switch A adopts a unidirectional thyristor, which has the advantages of high current rise rate tolerance and high reliability. Meanwhile, the charging unit B is adopted, which has the advantage of small impact on the closing current of the mechanical switch K1. The charging power supply of capacitor C1 is provided by the connection node of mechanical switch K1 and load RL1, which has the advantages of not affecting the isolation voltage across mechanical switch K1 and no leakage current in the normally open state of mechanical switch K1. The control unit C stores an adaptive control program. In the breaking of the mechanical switch K1, either the change of the voltage signal of the connection node of the mechanical switch K1 and the load RL1, or the voltage signal of the other end of the connection node of the power semiconductor device SCR1 and the load RL1 (i.e., the connection node of the capacitor C1 and the power semiconductor device SCR1) is utilized to optimize the arc extinguishing control parameter (i.e., adjust the time difference between controlling the conduction of the power semiconductor device and the disconnection of the contact of the mechanical switch) to achieve the best arc extinguishing effect. The control unit C comprises a programmable device, which has a built-in intelligent unit used for program controlling, which can complete timing, A/D acquisition, voltage comparison, logic processing and which is good for simplifying the circuit. It can adjust the control mode according to different conditions (voltage changes) of the load, improve the arc extinguishing effect, and effectively prolong the electrical life of the mechanical switch. The electrical life of the mechanical switch is calculated according to the arcing condition and the operation times. The contact state (on state, off state, arcing state) of the mechanical switch K1 can be detected in real time without auxiliary contacts, and relevant information is transmitted.

Embodiment 6 of a direct current arc extinguishing apparatus of the present disclosure is shown in FIG. 10, which, also called a direct current arc management system, is suitable for multiplex mechanical switches electric control systems such as new energy vehicles. It comprises a voltage detection switch A, a capacitor C1, a charging unit B, a third diode D3 and a fourth semiconductor switch SCR4 (the semi-controlled device, unidirectional thyristor, PA and PB can be disconnected as required, but is not recommended; when PA and PB are disconnected, a control unit C needs to collect the voltages of PA and PB). The third diode D3 is connected in parallel with the fourth semiconductor switch SCR4, and the control port of the fourth semiconductor switch SCR4 is connected with the control unit C. A voltage signal of a common end PB in a second series circuit, which comprises the capacitor C1 ,the fourth semiconductor switch SCR4, a first semiconductor switch S1 (semi-controlled device, unidirectional thyristor, charging switch) of the charging unit B, and a power semiconductor device (SCR1, SCR2, SCR3, semi-controlled device, unidirectional thyristor), is connected to the control unit C. The input power supply end of the mechanical switch K1 (main positive contactor) is connected with a battery BT, which is connected with a charging mechanical switch K5, and the negative electrode of which is connected with the working ground by a sixth mechanical switch K6 (main negative contactor). Further included is a fifth semiconductor device D5 (a fifth diode; which can also be replaced by a fifth unidirectional thyristor connected to the control unit C. When the fifth unidirectional thyristor is used, the fourth semiconductor switch SCR4 is selected as required. When the breaking of the charging mechanical switch K5, the capacitor C1 is discharged by the fifth unidirectional thyristor and the battery BT for arc extinguishing while the charging mechanical switch K5 is being broken.) The J1 port is the control power supply port; and J2 port is a communication port, which is used to receive control instructions and data, and to transmit the device and external status information (mechanical switch, load status, etc.). J1 and J2 are selected as required.

Voltage detection switch A: It comprises a control unit C and power semiconductor device (SCR1, SCR2, SCR3), the voltage signal of connection node of mechanical switch (K1, K2, K3, K5) and load (RL1, RL2, RL3, BT) is transmitted to the control unit C; and the power semiconductor device (SCR1, SCR2, SCR3) is connected to the control unit C.

Control unit C: It is a built-in programmable device (microcontroller) for A/D acquisition of voltage signal of load (RL1, RL2, RL3) and common end PB, and the voltage signal of the input power supply end of the mechanical switch K1 is connected to the control unit C (A/D acquisition). When the breaking operation of the mechanical switch (K1, K2, K3), it is detected that the contact of the mechanical switch (K1, K2, K3) is being broken, and the delay controls the conduction of power semiconductor device (SCR1, SCR2, SCR3). The electrical characteristics of the mechanical switch (K1, K2, K3) and the load (RL1, RL2, RL3) connected to the control unit C are not necessarily coincident; thus, in order to achieve the best arc extinguishing effect, the control unit C needs to either store or receive the parameter related to the current of the load (RL1, RL2, RL3), or the operation time parameter of the mechanical switch (K1, K2, K3,). When the breaking operation of the mechanical switch (K1, K2, K3), the larger the current of the load (RL1, RL2, RL3), the longer the delay time, and the delay time is proportional to the current of the load (RL1, RL2, RL3). The time parameter of the delay control can be completed by a microcontroller built in the control unit C. The control signal of the mechanical switch (K1, K2, K3, K5, K6) is transmitted to the control unit C (which is beneficial to improving arc extinguishing accuracy and real-time performance, and can be selected according to needs). The control mode, in which the control signal of the mechanical switch (K1, K2, K3, K5, K6) is provided by the control unit C, can also be adopted (which is more beneficial to optimizing and controlling the action logic and arc extinguishing control logic of each mechanical switch, and can be selected according to needs).

When the breaking operation of the mechanical switch (K1, K2, K3), the larger the current of the load (RL1, RL2, RL3) is, the larger the voltage difference between the capacitor C1 and the load (RL1, RL2, RL3) is, and the power semiconductor device (SCR1, SCR2, SCR3) is turned on, which is used for improving the discharge current of the capacitor C1.

Charging unit B: It comprises a fourth mechanical switch K4, a first current limiting element R1 (a resistor, which can be omitted when the third diode D3 is connected in series with the current limiting element and the load is a non-capacitive load), and a first semiconductor switch S1 (semi-controlled device, unidirectional thyristor). The fourth mechanical switch K4 and the first semiconductor switch S1 are charging switches. The control signal of the control unit C is transmitted to the fourth mechanical switch K4 and the first semiconductor switch S1. The fourth mechanical switch K4 is used in series with the first semiconductor switch S1; the first semiconductor switch S1 is used for overcoming the closed arc of the fourth mechanical switch K4; and the fourth mechanical switch K4 is used for improving the safety of the system. In practical engineering applications, the fourth mechanical switch K4 and the first semiconductor switch S1 can be optional. The main circuit power supply of the mechanical switch K1 (the main circuit power supply end of the mechanical switch K1) charges the capacitor C1 by the fourth mechanical switch K4, the first current limiting element R1, the first semiconductor switch S1 and the third diode D3 (it is optional when the fourth semiconductor switch SCR4 adopts a bidirectional thyristor).

Working principle: The mechanical switch K6 is closed, when the power input of the mechanical switch K1 is powered on (the battery BT is turned on); the control unit C first controls the fourth mechanical switch K4 to be closed; and then the control unit C provides a pulse signal to trigger the first semiconductor switch S1 to charge the capacitor C1. When the charging current is less than the minimum on-hold current of the first semiconductor switch S1, the first semiconductor switch S1 turns off on its own. when charging of the capacitor C1, by detecting the voltage of the common end PB point, the control unit C can check whether the first semiconductor switch S1 is in an on or off state, judge whether the charging of the capacitor C1 is completed, and can detect the capacitance of the capacitor C1 (used for judging whether the capacitance of the capacitor is normal, and optimizing the arc extinguishing control program corresponding to the collected voltage signal data). When the closing operation of the mechanical switch (K1, K2, K3), the control unit C provides a pulse signal to trigger the first semiconductor switch S1 and the power semiconductor device (any one of SCR1, SCR2, SCR3) to conduct and supply power to the load (any one of RL1, RL2, RL3) (such as the motor controller, direct current converter, etc.), which can effectively overcome the current impact of capacitive load on the mechanical switch (K1, K2, K3) and closing arc. The control unit C can decide whether the first semiconductor switch S1 and the power semiconductor device (SCR1, SCR2, SCR3) is turned off or not by detecting the voltage of the common end PB point, and if turned off, the mechanical switch (K1, K2, K3) is also closed.

When the breaking of the mechanical switch (K1, K2, K3), the first semiconductor switch S1 is in an off state. The control unit C detects that the contacts of the mechanical switch (K1, K2, K3) is disconnected, and then controls the fourth semiconductor switch SCR4 and the power semiconductor device (SCR1, SCR2, SCR3) to be turned on in delay (the delay is more than 100 microseconds, which can be completed by the built-in microcontroller, or conforms to the voltage value set by the control unit C at the same time, and the delay value is related to the breaking speed of the corresponding mechanical switch). Alternatively, when it is detected that the voltage signal of the connection node of the mechanical switch (K1, K2, K3) and the load (RL1, RL2, RL3) reach a preset voltage value (or conforms to the time value set by the control unit C at the same time, which is related to the breaking speed of the corresponding mechanical switch), the fourth semiconductor switch SCR4 and the power semiconductor device (SCR1, SCR2, SCR3) is controlled to be conductive. The control unit C can decide whether the fourth semiconductor switch SCR4 and the power semiconductor device (SCR1, SCR2, SCR3) is in an on state by detecting the voltage of the common end PB point. The capacitor C1 is discharged rapidly by the load (RL1, RL2, RL3), the fourth semiconductor switch SCR4 and the power semiconductor device (SCR1, SCR2, SCR3); the voltage across the load (RL1, RL2, RL3) rises; the electric field strength between contacts of the mechanical switch (K1, K2, K3) rapidly decreases; and finally the purpose of rapidly extinguishing arc of the mechanical switch (K1, K2, K3) is achieved. The control unit C decides whether the fourth semiconductor switch SCR4 and the power semiconductor device (SCR1, SCR2, SCR3) is in the off state by detecting the voltage of the common end PB, so as to judge whether the capacitor C1 has completed discharging and prepare for the next charging of the capacitor C1.

When the breaking of the charging mechanical switch K5, the control unit C controls the fourth semiconductor switch SCR4 to turn on, and the capacitor C1 is discharged by the fourth semiconductor switch SCR4 and the battery BT, the fifth semiconductor device D5 and the fourth mechanical switch K4, thus extinguishing the arc of the charging mechanical switch K5 while breaking.

The control unit C performs A/D acquisition (or high and low level acquisition) on the voltage signal of the common end PB, and has the following advantages:
1. The fourth semiconductor switch SCR4, the fifth semiconductor device D5, the first semiconductor switch S1, and the power semiconductor device (SCR1, SCR2, SCR3) can be quickly and accurately detected in either an on state, or an off state (whether charging or discharging is completed), or a breakdown state by using a single endpoint without high-resolution A/D acquisition, thereby ensuring the response speed and safety of the system.
2. The capacitance of the capacitor C1 is detected under the condition that the electric energy of the capacitor C1 is not consumed; the capacitor C1 does not need to be frequently charged; the voltage across the capacitor C1 is indirectly known; and the response speed and safety of the system are improved.

The load (RL1, RL2, RL3) may be of different types such as motor controllers, DC/DC converters, motors, resistors, etc.

The foregoing voltage signal of the connection node of the mechanical switch (K1, K2, K3) and the load (RL1, RL2, RL3) are the voltage of the two ends of the load (RL1, RL2, RL3) (when the control unit C is used for A/D acquisition of the voltage signal, it has the advantages of not affecting the insulation withstand voltage of the two ends of the mechanical switch K1, and no leakage current when the mechanical switch K1 is normally open). The voltage signal may also be a potential difference between the capacitor C1 and the load (RL1, RL2, RL3), that is, a voltage relative to either the other end of the power semiconductor device (SCR1, SCR2, SCR3), or the power input end of the mechanical switch (K1, K2, K3).

In the breaking of the mechanical switch, when the change speed of the voltage signal is less than the change speed set by the control unit C, the control unit C does not provide the relevant power semiconductor device conduction control signal to prevent the capacitor C1 from discharging too slowly, the power semiconductor device (SCR1, SCR2, SCR3) from turning off too slowly and thus affecting the arc extinguishing response speed of other mechanical switches. The control unit C stores the parameter related to the residual voltage change of the load, which is beneficial to improving the accuracy of the breaking detection of the mechanical switch. The control unit C stores an adaptive control program. When the breaking of the mechanical switch (K1, K2, K3), the change of the voltage signal of the connection node of the mechanical switch (K1, K2, K3, K5) and the load (RL1, RL2, RL3) or the voltage signal of the other end (PB) of the connection node of the power semiconductor device (SCR1, SCR2, SCR3) and the load (RL1, RL2, RL3) is utilized to optimize the arc extinguishing control parameter(s) (i.e., to adjust the time difference between the conduction of the power semiconductor device and the disconnection of the contacts of the mechanical switch) so as to achieve the optimal arc extinguishing effect.

The mechanical switch K1, the mechanical switch K2 and the mechanical switch K3 are respectively defined as a first mechanical switch, a second mechanical switch and a third mechanical switch;

The load RL1, the load RL2 and the load RL3 are respectively defined as a first load, a second load, and a third load;

The power semiconductor device SCR1, the power semiconductor device SCR2, and the power semiconductor device SCR3 are respectively defined as a first power semiconductor device, a second power semiconductor device, and a third power semiconductor device.

In this embodiment, the second load and the third load are both the loads of the first mechanical switch (mechanical switch K1).

When used in the occasions of arc extinguishing of multiplex mechanical switches such as new energy vehicles, the fourth mechanical switch K4 is a pre-charge contactor, the first current limiting element R1 is a pre-charge resistor, the first mechanical switch (mechanical switch K1) is a main positive contactor, and the sixth mechanical switch K6 is a main negative contactor. When arc extinguishing fails, the sixth mechanical switch K6 is controlled to break. The control unit C controls the fourth mechanical switch K4 to be turned off when detecting abnormality (such as breakdown or spurious triggering of the first semiconductor switch, breakdown or spurious triggering of the power semiconductor device). Except for the sixth mechanical switch K6 and the fourth mechanical switch K4, the other mechanical switch (K1, K2, K3, K5) of the direct current arc extinguishing apparatus of this disclosure can adopt common (non-sealed high-voltage) contactor, which can greatly reduce the cost and improve the safety (no risk of air leakage). Especially when it is applied to the working conditions where automobiles and similar appliances are in motion and unexpected mechanical impacts (such as collision, rollover, etc.) may occur, mechanical switch (K1, K2, K3) may accidentally close and break in a normally open state, or the opening distance may become smaller, or impact voltages may occur across mechanical switch (K1, K2, K3), and arcing may occur at this time. When the control unit C detects arcing under the breaking state of the mechanical switch (K1, K2, K3), the control unit C controls conduction of power semiconductor device (SCR1, SCR2, SCR3), and the capacitor C1 forms a discharge loop by the power semiconductor device (SCR1, SCR2, SCR3) and the load (RL1, RL2, RL3) to extinguish arc. When the control unit C detects the failure of arc extinguishing, it outputs a signal to control the mechanical switch K6 to break.

In this embodiment, the control unit C comprises a programmable device, which has a built-in intelligent unit used for program controlling. It can adjust the control mode according to different conditions of the load (RL1, RL2, RL3), improve the arc extinguishing effect, and effectively prolong the electrical life of the mechanical switch. Timing (delay control power semiconductor device), A/D acquisition, voltage comparison, logic processing, etc. can also be completed, which is beneficial to simplifying the circuit. A capacitor, a control unit and a charging switch are jointly used for arc extinguishing control, pre-charging (or closing arc extinguishing) and detection (on state, off state and arcing state) of a multiplex mechanical switches (the mechanical switches can be connected in series with each other). The electrical life of the mechanical switch is calculated according to the arcing conditions and the operation times, and relevant information (fault codes, etc.) is transmitted. As a direct current arc extinguishing apparatus (direct current arc management system) with arc management and arc extinguishing functions, it is conducive to improving the overall safety of the electric control systems and has the characteristics of higher cost performance, and can be widely applied to new energy vehicles, rail transit, ships, aviation, automatic control and other fields.

According to real-life working condition, the capacitor C1 and the fourth semiconductor switch can also be multiple, which can improve the response speed; and can adopt a multi-pulse arc extinguishing mode (two or more capacitors, arc of the mechanical switch is extinguished by two or more pulses), and the charging unit B can also adopt a switching power supply to charge the capacitor C1.

In the embodiments 5 and 6, it is suggested that the control unit C should use a transformer to trigger a power semiconductor device. The control unit C stores an adaptive control program. The control unit C adjusts the time difference between the conduction of the power semiconductor device and the disconnection of the contact of the mechanical switch by using the voltage change rate of the voltage signal of the connection node of the mechanical switch and the load in the breaking of the mechanical switch. A small rate of change means a large breaking current, and the time difference needs to be increased, so that the contacts of the mechanical switch have a relatively large opening distance, and the arc breaking capability of the mechanical switch is relatively strong. Combined with capacitor is discharged to extinguish the arc, the purpose of stable and reliable arc extinguishing can be achieved.

In the foregoing embodiments, the electrical parameter of the voltage detection switch can be selected with reference to the following requirements:
1. When the working voltage of the mechanical switch is not high (less than or equal to 200V), or when the capacitance of capacitor is large, the voltage detection switch can be designed to conduct in an interval where the potential difference across the mechanical switch is greater than 5V and less than or equal to 20V (when the capacitance of capacitor is large enough, the voltage value can be appropriately lowered).
2. When the working voltage of the mechanical switch is high (greater than 200V), or the capacitance of capacitor is small, or the internal resistance of the discharge circuit is high, the voltage detection switch (power semiconductor device) can be designed to conduct when the voltage across the mechanical switch is greater than 20V and less than the working voltage interval of the mechanical switch in the breaking of the mechanical switch; and preferably less than 1/2 of the working voltage of the mechanical switch. This is because when the breaking of the mechanical switch, the voltage across the mechanical switch rises at a high rate between 0 and 20V, and the distance between the contacts of the mechanical switch is small. At the same time, in the breaking of the mechanical switch, the potential difference between the capacitor and the load is not less than 5V, and the voltage detection switch is turned on. It is used to obtain larger discharge current and larger opening distance of mechanical switches and thus improve the reliability of arc extinguishing.
3. The voltage detection switch is turned on when the mechanical switch is arcing. Because the voltage change rate across the mechanical switch is large and the distance between the contacts of the mechanical switch is extremely small when the breaking of the mechanical switch and before arcing of the mechanical switch, it requires a large capacitance of capacitor to stabilize arc extinguishing in order to achieve the purpose of no-arc breaking. The arc is extinguished completely within 100 microseconds when the voltage detection switch is turned on (if the time is too long, the capacitor needs an extreme large capacitance, and the arc extinguishing stability is poor).
4. When the breaking of the mechanical switch, the voltage detection switch is turned on when the breakdown voltage of the opening distance between the contacts of the mechanical switch is greater than the working voltage of the mechanical switch and the purpose can be achieved by the delay conduction of the voltage detection switch. The delay control of the power semiconductor device can be completed either by the delay circuit of the voltage detection switch (such as the microcontroller of the control unit or the delay circuit of the resistance-capacitance transistor) when the contacts of the mechanical switch are detected to be disconnected by the voltage detection switch; or by the power semiconductor device when the voltage detection switch detects a higher voltage across the mechanical switch (i.e., the voltage detection switch with high opening voltage). This has the advantages of effectively preventing the arc from reigniting when arc extinguishing and requiring minimal capacitance of capacitor. The parameter can be adjusted according to the breaking speed of the mechanical switch, the capacitance of capacitor, the working voltage of the mechanical switch and the characteristics of the load.

In the foregoing embodiments, the capacitance requirement can be reduced by decreasing the inductance and internal resistance of the discharge circuit as much as possible and increasing the rising rate of the discharge current of the capacitor within the range of the current rising rate of the power semiconductor device. The power semiconductor device can adopt unidirectional thyristors greater than 180A per microsecond (multiple thyristors can be used in parallel), by using the internal resistance of the discharge circuit of capacitor; the operation of the power semiconductor device is in a safe range; and the arc extinguishing speed and the arc extinguishing reliability are improved.

In the foregoing embodiments, the mechanical switch is a contactor (relay). In the present disclosure, any mechanical breakpoint as an arc extinguishing target can also be defined as a mechanical switch, such as a fuse link, a connector, etc.

In summary, the present disclosure has the following advantages:
1. Due to the adoption of the voltage detection switch, the circuit is simple, a large potential difference is formed between the capacitor and the load, and the voltage detection switch is turned on, which is beneficial to overcoming the influence of the internal resistance of the capacitor discharge circuit, improving the instantaneous discharge current of the capacitor, and low capacitance requirements. Due to the small capacitance of capacitor, it has the advantages of low cost, small volume, high reliability, and low power required by the first current limiting element and fast response speed (i.e., fast charging and discharging speed, which is very important for improving the response speed of arc extinguishing of multiplex mechanical switches. When the capacitance of capacitor is designed to be 30 microfarads, the first current limiting element is designed to be 33 ohms for arc extinguishing of mechanical switch loaded with tens of ampere to hundreds of ampere, which can complete the entire arc extinguishing of capacitor charging and discharging in ten milliseconds. According to the technical scheme shown in FIG. 10, the arc extinguishing of tens or even hundreds of mechanical switches can be completed in one second). For a load of 800V and 500A, only a few tens of microfarads of capacitance can satisfy the rapid arc extinguishing within a few microseconds to several tens of microseconds (not exceeding 100 microseconds).
2. Compared with full-controlled type device, the adopted semi-controlled type device (switch) has the advantages of large overload capacity, short conduction time, low cost, and no breaking overvoltage when the current crosses zero and cut off, which can economically solve the arc extinguishing problem of load above 100 ampere (unidirectional thyristors with rated working current of 25 ampere can be adopted to extinguish arc for current above hundreds ampere).
3. The arc extinguishing mode connected in parallel with the load is more flexible and convenient to use, and the arc extinguishing mode of capacitor discharging can effectively overcome the phenomenon of cutting load overvoltage.
4. When the voltage fluctuates, the voltage detection switch is not conductive and the voltage detection switch has no temperature rise, thus the electrical life of capacitor is long.
5. It has wide application range, and can extinguish arc for manually controlled switches, stroke switches and other mechanical switches without control coils.
6. The breaking voltage (arc breaking voltage) of the mechanical switch is reduced, and the electrical life of the mechanical switch is greatly prolonged (as shown in FIG. 1, when the working voltage across the mechanical switch is 600V and the load current is 300A, the electrical life is about 150 times. When the mechanical switch is matched with the direct current arc extinguisher of the disclosure and the open value of the voltage detection switch is designed to be 90V, which is equivalent to breaking the direct circuit of 90V/300A by the mechanical switch, and the electrical life of the mechanical switch can reach more than 20,000 times).

## Claims

1. A direct current arc extinguishing apparatus, wherein a mechanical switch (K1, K2,K3) required to extinguish arc is connected with a load (RL1, RL2, RL3) in series, comprising a voltage detection switch (A) and a capacitor (C1), the voltage detection switch (A) being connected with the capacitor (C1) forming a series circuit, the series circuit being connected with a connection node of the mechanical switch (K1, K2, K3) and the load (RL1, RL2, RL3); wherein when breaking the mechanical switch (K1, K2, K3), the capacitor (C1) forms a discharge loop by the voltage detection switch (A) and the load (RL1, RL2, RL3) and is used for breaking arc extinguishing of the mechanical switch (K1, K2, K3), **characterized in that** the voltage detection switch (A) comprises a control unit (C) and a power semiconductor device (SCR1, SCR2, SCR3); the control unit (C) is connected with the connection node, a voltage signal of the connection node being transmitted to the control unit (C); the power semiconductor device (SCR1, SCR2, SCR3) is connected with the control unit (C); when breaking the mechanical switch (K1, K2, K3), the power semiconductor device (SCR1, SCR2, SCR3) is turned on, and the capacitor (C1) is discharged by the power semiconductor device (SCR1, SCR2, SCR3) and the load (RL1, RL2, RL3).

2. The direct current arc extinguishing apparatus according to claim 1, wherein the voltage detection switch (A) is configured for turning on in an interval where the potential difference across the mechanical switch (K1, K2, K3) is greater than 5 V and less than the working voltage of the mechanical switch (K1, K2, K3).

3. The direct current arc extinguishing apparatus according to claim 2, wherein the voltage detection switch (A) is a semi-controlled switch.

4. The direct current arc extinguishing apparatus according to claim 3, wherein the voltage detection switch (A) is a two-end circuit.

5. The direct current arc extinguishing apparatus according to claim 3, wherein the semi-controlled switch comprises a thyristor (TR1, SCR1), either the gate of the thyristor (TR1, SCR1) is connected with the anode of the thyristor (TR1, SCR1), or the gate of the thyristor (TR1, SCR1) is connected with the second anode of the thyristor (TR1, SCR1).

6. The direct current arc extinguishing apparatus according to claim 5, further comprising a first semiconductor device (Z1), wherein a cut-in voltage of the first semiconductor device (Z1) is greater than 3V and the gate of the thyristor (TR1, SCR1) is connected with either the anode or the second anode by the first semiconductor device (Z1).

7. The direct current arc extinguishing apparatus according to claim 6, wherein the first semiconductor device (Z1) is a zener diode, a transient voltage suppressor, a trigger diode or a varistor.

8. The direct current arc extinguishing apparatus according to claim 7, further comprising a second diode (D2), wherein the second diode (D2), the first semiconductor device (Z1) and the gate of the thyristor (TR1, SCR1) are connected in series.

9. The direct current arc extinguishing apparatus according to claim 3, wherein the detection port of the voltage detection switch (A) and the output port of the voltage detection switch (A) are not insulated from each other.

10. The direct current arc extinguishing apparatus according to claim 3, wherein the voltage detection switch (A) is a delay semiconductor switch.

11. The direct current arc extinguishing apparatus according to claim 3, wherein the semi-controlled switch is packaged as a device with insulating material.

12. The direct current arc extinguishing apparatus according to claim 3, wherein the semi-controlled switch is packaged as a device with insulating material and a charging unit (B) for charging the capacitor (C1).

13. The direct current arc extinguishing apparatus according to claim 1, configured for when breaking the mechanical switch (K1, K2, K3), the control unit (C) detects that the contact of the mechanical switch (K1, K2, K3) is being broken, and the power semiconductor device (SCR1, SCR2, SCR3) is controlled to be turned on by delay, which is greater than 100 microseconds.

14. The direct current arc extinguishing apparatus according to claim 1, wherein the control unit (C) is configured for performing A/D acquisition on the voltage signal.

15. The direct current arc extinguishing apparatus according to claim 14, further comprising a charging unit (B) for charging the capacitor (C1), the charging unit (B) being connected in parallel with the power semiconductor device (SCR1, SCR2, SCR3), the connection node charges the capacitor (C1) by the charging unit (B), and the voltage signal is the voltage of the load (RL1, RL2, RL3).

16. The direct current arc extinguishing apparatus according to claim 15, wherein the charging unit (B) comprises a first diode (D1) and a first current limiting element (R1) connected in series, and the voltage signal of the capacitor (C1) is transmitted to the control unit (C) for detecting the capacity of the capacitor (C1).

17. The direct current arc extinguishing apparatus according to claim 1, wherein the voltage signal is the voltage of the load (RL1, RL2, RL3), or the voltage relative to the other port of the power semiconductor device (SCR1, SCR2, SCR3), or the voltage relative to the power input of the mechanical switch (K1, K2, K3).

18. The direct current arc extinguishing apparatus according to claim 1, configured for either transmitting the control signal of the mechanical switch (K1, K2, K3) to the control unit (C), or transmitting the control signal of the control unit (C) to the mechanical switch (K1, K2, K3).

19. The direct current arc extinguishing apparatus according to claim 1, wherein the control unit (C) stores an adaptive control program, and is configured for optimizing an arc extinguishing control parameter by utilizing changes of the voltage signal.

20. The direct current arc extinguishing apparatus according to claim 1, wherein the number of mechanical switches (K1, K2, K3) is at least two, including a first mechanical switch (K1) and a second mechanical switch (K2); the number of the loads (RL1, RL2, RL3) is at least two, including a first load (RL1) and a second load (RL2); the number of the power semiconductor devices (SCR1, SCR2, SCR3) is at least two, including a first power semiconductor device (SCR1) and a second power semiconductor device (SCR2).

21. The direct current arc extinguishing apparatus according to claim 1, wherein the charging unit (B) at least comprises a charging switch, and a control signal of the control unit (C) is transmitted to the charging switch.

22. The direct current arc extinguishing apparatus according to claim 21, wherein the main loop power supply of the mechanical switch (K1, K2, K3) is configured for charging the capacitor (C1) by the charging switch.

23. The direct current arc extinguishing apparatus according to claim 21, configured for when closing the mechanical switch (K1, K2, K3), the control unit (C) controls the charging switch and the power semiconductor device (SCR1, SCR2, SCR3) to be turned on, and then the mechanical switch (K1, K2, K3) is closed; and when breaking the mechanical switch (K1, K2, K3), the charging switch is in a cut-off state.

24. The direct current arc extinguishing apparatus according to claim 21, further comprising a fourth semiconductor switch; the control port of the fourth semiconductor switch is connected with the control unit (C); the capacitor (C1) and the fourth semiconductor switch form a second series circuit; and the capacitor (C1) forms a discharge loop by the fourth semiconductor switch, the power semiconductor device (SCR1, SCR2, SCR3) and the load (RL1, RL2, RL3).

25. The direct current arc extinguishing apparatus according to claim 24, further comprising a third diode, wherein the main loop power supply of the mechanical switch (K1, K2, K3) is configured for charging the capacitor (C1) by the charging switch and the third diode.

26. The direct current arc extinguishing apparatus according to claim 24, further comprising a fifth semiconductor device (D5), wherein the input power supply end of the mechanical switch (K1, K2, K3) is connected with a battery (BT), and the battery (BT) is connected with a charging mechanical switch (K5); the apparatus configured for when breaking the charging mechanical switch (K5), the capacitor (C1) is discharged by the fourth semiconductor switch (SCR4) and the fifth semiconductor device (D5), and the battery (BT) for breaking arc extinguishing of the charging mechanical switch (K5), and the fifth semiconductor device (D5) is either a fifth diode (D5), or a fifth unidirectional thyristor connected with the control unit (C).

27. The direct current arc extinguishing apparatus according to claim 24, wherein a voltage signal of a common terminal of the second series circuit, the charging switch and the power semiconductor device (SCR1, SCR2, SCR3) are connected to the control unit (C).

28. The direct current arc extinguishing apparatus according to claim 21, configured for transmitting the control signal of the mechanical switch (K1, K2, K3) to the control unit (C), or transmitting the control signal of the control unit (C) to the mechanical switch (K1, K2, K3).

29. The direct current arc extinguishing apparatus according to claim 21, wherein the control unit (C) is configured for controlling the power semiconductor device (SCR1, SCR2, SCR3) to be turned on when the control unit (C) detects arcing in the off state of the mechanical switch (K1, K2, K3).

30. The direct current arc extinguishing apparatus according to claim 21, further comprising a fifth unidirectional thyristor, wherein the fifth unidirectional thyristor is connected with the control unit (C); the input power supply end of the mechanical switch (K1, K2, K3) is connected with a battery (BT); the battery (BT) is connected with a charging mechanical switch (K5); and when breaking the charging mechanical switch (K5), the capacitor (C1) is discharged by the battery (BT) and the fifth unidirectional thyristor, which is used for breaking arc extinguishing of the charging mechanical switch (K5).

31. The direct current arc extinguishing apparatus according to claim 21, wherein the number of mechanical switches (K1, K2, K3) is at least two, including a first mechanical switch (K1) and a second mechanical switch (K2); the number of the loads (RL1, RL2, RL3) is at least two, including a first load (RL1) and a second load (RL2); the number of the power semiconductor devices (SCR1, SCR2, SCR3) is at least two, including a first power semiconductor device (SCR1) and a second power semiconductor device (SCR2).

32. The direct current arc extinguishing apparatus according to claim 1, configured for when breaking the mechanical switch (K1, K2, K3), the control unit (C) detects that the contact of the mechanical switch (K1, K2, K3) is being broken, and controls the power semiconductor device (SCR1, SCR2, SCR3) to be turned on with delay, which is greater than 100 microseconds; the control unit (C) stores parameter related to the current of the load (RL1, RL2, RL3) or receives parameter related to the current of the load (RL1, RL2, RL3); and when the breaking of the mechanical switch (K1, K2, K3), the larger the current of the load (RL1, RL2, RL3), the longer the delay time.

## Patentansprüche

1. Gleichstrom-Lichtbogenlöschvorrichtung, wobei ein mechanischer Schalter (K1, K2, K3), der zum Löschen eines Lichtbogens benötigt wird, mit einer Last (RL1, RL2, RL3) in Reihe verbunden ist, umfassend einen Spannungserfassungsschalter (A) und einen Kondensator (C1), wobei der Spannungserfassungsschalter (A) mit dem Kondensator (C1) verbunden ist und eine Reihenschaltung bildet, wobei die Reihenschaltung mit einem Verbindungsknoten des mechanischen Schalters (K1, K2, K3) und der Last (RL1, RL2, RL3) verbunden ist; wobei der Kondensator (C1) beim Unterbrechen des mechanischen Schalters (K1, K2, K3) eine Entladungsschleife durch den Spannungserfassungsschalter (A) und die Last (RL1, RL2, RL3) bildet und zum Unterbrechen des Lichtbogenlöschens des mechanischen Schalters (K1, K2, K3) verwendet wird, **dadurch gekennzeichnet, dass** der Spannungserfassungsschalter (A) eine Steuereinheit (C) und eine Leistungshalbleitervorrichtung (SCR1, SCR2, SCR3) umfasst; wobei die Steuereinheit (C) mit dem Verbindungsknoten verbunden ist, ein Spannungssignal des Verbindungsknotens an die Steuereinheit (C) übertragen wird; die Leistungshalbleitervorrichtung (SCR1, SCR2, SCR3) mit der Steuereinheit (C) verbunden ist; die Leistungshalbleitervorrichtung (SCR1, SCR2, SCR3) beim Unterbrechen des mechanischen Schalters (K1, K2, K3) eingeschaltet wird und der Kondensator (C1) durch die Leistungshalbleitervorrichtung (SCR1, SCR2, SCR3) und die Last (RL1, RL2, RL3) entladen wird.

2. Gleichstrom-Lichtbogenlöschvorrichtung nach Anspruch 1, wobei der Spannungserfassungsschalter (A) konfiguriert ist, um sich in Intervallen einzuschalten, bei denen die Potentialdifferenz am mechanischen Schalter (K1, K2, K3) größer als 5 V und kleiner als die Arbeitsspannung des mechanischen Schalters (K1, K2, K3) ist.

3. Gleichstrom-Lichtbogenlöschvorrichtung nach Anspruch 2, wobei der Spannungserfassungsschalter (A) ein halbgesteuerter Schalter ist.

4. Gleichstrom-Lichtbogenlöschvorrichtung nach Anspruch 3, wobei der Spannungserfassungsschalter (A) eine Zwei-Enden-Schaltung ist.

5. Gleichstrom-Lichtbogenlöschvorrichtung nach Anspruch 3, wobei der halbgesteuerte Schalter einen Thyristor (TR1, SCR1) umfasst, entweder das Gate des Thyristors (TR1, SCR1) mit der Anode des Thyristors (TR1, SCR1) verbunden ist oder das Gate des Thyristors (TR1, SCR1) mit der zweiten Anode des Thyristors (TR1, SCR1) verbunden ist.

6. Gleichstrom-Lichtbogenlöschvorrichtung nach Anspruch 5, ferner umfassend eine erste Halbleitervorrichtung (Z1), wobei eine Einschaltspannung der ersten Halbleitervorrichtung (Z1) größer als 3V ist und das Gate des Thyristors (TR1, SCR1) durch die erste Halbleitervorrichtung (Z1) entweder mit der Anode oder der zweiten Anode verbunden ist.

7. Gleichstrom-Lichtbogenlöschvorrichtung nach Anspruch 6, wobei die erste Halbleitervorrichtung (Z1) eine Zener-Diode, ein Transient Voltage Suppressor, eine Trigger-Diode oder ein Varistor ist.

8. Gleichstrom-Lichtbogenlöschvorrichtung nach Anspruch 7, ferner umfassend eine zweite Diode (D2), wobei die zweite Diode (D2), die erste Halbleitervorrichtung (Z1) und das Gate des Thyristors (TR1, SCR1) in Reihe verbunden sind.

9. Gleichstrom-Lichtbogenlöschvorrichtung nach Anspruch 3, wobei der Erfassungsanschluss des Spannungserfassungsschalters (A) und der Ausgangsanschluss des Spannungserfassungsschalters (A) voneinander nicht isoliert sind.

10. Gleichstrom-Lichtbogenlöschvorrichtung nach Anspruch 3, wobei der Spannungserfassungsschalter (A) ein Verzögerungshalbleiterschalter ist.

11. Gleichstrom-Lichtbogenlöschvorrichtung nach Anspruch 3, wobei der halbgesteuerte Schalter als eine Vorrichtung mit Isoliermaterial verpackt ist.

12. Gleichstrom-Lichtbogenlöschvorrichtung nach Anspruch 3, wobei der halbgesteuerte Schalter als eine Vorrichtung mit Isoliermaterial und einer Ladeeinheit (B) zum Laden des Kondensators (C1) verpackt ist.

13. Gleichstrom-Lichtbogenlöschvorrichtung nach Anspruch 1, die beim Unterbrechen des mechanischen Schalters (K1, K2, K3) dazu konfiguriert ist, dass die Steuereinheit (C) erfasst, dass der Kontakt des mechanischen Schalters (K1, K2, K3) unterbrochen ist, und die Leistungshalbleitervorrichtung (SCR1, SCR2, SCR3) so gesteuert ist, dass sie sich bei Verzögerung, die mehr als 100 Mikrosekunden beträgt, einschaltet.

14. Gleichstrom-Lichtbogenlöschvorrichtung nach Anspruch 1, wobei die Steuereinheit (C) zum Durchführen von A/D-Erfassung bei dem Spannungssignal konfiguriert ist.

15. Gleichstrom-Lichtbogenlöschvorrichtung nach Anspruch 14, ferner umfassend eine Ladeeinheit (B) zum Laden des Kondensators (C1), wobei die Ladeeinheit (B) mit der Leistungshalbleitervorrichtung (SCR1, SCR2, SCR3) parallel verbunden ist, der Verbindungsknoten den Kondensator (C1) durch die Ladeeinheit (B) lädt und das Spannungssignal die Spannung der Last (RL1, RL2, RL3) ist.

16. Gleichstrom-Lichtbogenlöschvorrichtung nach Anspruch 15, wobei die Ladeeinheit (B) eine erste Diode (D1) und ein erstes Strombegrenzungselement (R1), die in Reihe verbunden sind, umfasst, und das Spannungssignal des Kondensators (C1) an die Steuereinheit (C) zum Erfassen der Kapazität des Kondensators (C1) übertragen wird.

17. Gleichstrom-Lichtbogenlöschvorrichtung nach Anspruch 1, wobei das Spannungssignal die Spannung der Last (RL1, RL2, RL3) oder die Spannung in Bezug zu dem anderen Anschluss der Leistungshalbleitervorrichtung (SCR1, SCR2, SCR3) oder die Spannung in Bezug zu dem Leistungseingang des mechanischen Schalters (K1, K2, K3) ist.

18. Gleichstrom-Lichtbogenlöschvorrichtung nach Anspruch 1, die entweder zum Übertragen des Steuersignals des mechanischen Schalters (K1, K2, K3) an die Steuereinheit (C) oder Übertragen des Steuersignals der Steuereinheit (C) an den mechanischen Schalter (K1, K2, K3) konfiguriert ist.

19. Gleichstrom-Lichtbogenlöschvorrichtung nach Anspruch 1, wobei die Steuereinheit (C) ein adaptives Steuerprogramm speichert und zum Optimieren eines Steuerparameters zum Lichtbogenlöschen durch Verwenden von Änderungen des Spannungssignals konfiguriert ist.

20. Gleichstrom-Lichtbogenlöschvorrichtung nach Anspruch 1, wobei die Anzahl an mechanischen Schaltern (K1, K2, K3) mindestens zwei beträgt, einschließlich eines ersten mechanischen Schalters (K1) und eines zweiten mechanischen Schalters (K2); die Anzahl der Lasten (RL1, RL2, RL3) mindestens zwei beträgt, einschließlich einer ersten Last (RL1) und einer zweiten Last (RL2); die Anzahl der Leistungshalbleitervorrichtungen (SCR1, SCR2, SCR3) mindestens zwei beträgt, einschließlich einer ersten Leistungshalbleitervorrichtung (SCR1) und einer zweiten Leistungshalbleitervorrichtung (SCR2).

21. Gleichstrom-Lichtbogenlöschvorrichtung nach Anspruch 1, wobei die Ladeeinheit (B) mindestens einen Ladeschalter umfasst und ein Steuersignal der Steuereinheit (C) an den Ladeschalter übertragen wird.

22. Gleichstrom-Lichtbogenlöschvorrichtung nach Anspruch 21, wobei die Leistungsversorgung des mechanischen Schalters (K1, K2, K3) über die Hauptschleife zum Laden des Kondensators (C1) durch den Ladeschalter konfiguriert ist.

23. Gleichstrom-Lichtbogenlöschvorrichtung nach Anspruch 21, die beim Unterbrechen des mechanischen Schalters (K1, K2, K3) dazu konfiguriert ist, dass die Steuereinheit (C) den Ladeschalter und die Leistungshalbleitervorrichtung (SCR1, SCR2, SCR3) so steuert, dass sie sich einschalten, und dann der mechanische Schalter (K1, K2, K3) geschlossen wird; und der Ladeschalter sich beim Unterbrechen des mechanischen Schalters (K1, K2, K3) in einem abgeschalteten Zustand befindet.

24. Gleichstrom-Lichtbogenlöschvorrichtung nach Anspruch 21, ferner umfassend einen vierten Halbleiterschalter; wobei der Steueranschluss des vierten Halbleiterschalters mit der Steuereinheit (C) verbunden ist; der Kondensator (C1) und der vierte Halbleiterschalter eine zweite Reihenschaltung bilden; und der Kondensator (C1) eine Entladungsschleife durch den vierten Halbleiterschalter, die Leistungshalbleitervorrichtung (SCR1, SCR2, SCR3) und die Last (RL1, RL2, RL3) bildet.

25. Gleichstrom-Lichtbogenlöschvorrichtung nach Anspruch 24, ferner umfassend eine dritte Diode, wobei die Leistungsversorgung des mechanischen Schalters (K1, K2, K3) über die Hauptschleife zum Laden des Kondensators (C1) durch den Ladeschalter und die dritte Diode konfiguriert ist.

26. Gleichstrom-Lichtbogenlöschvorrichtung nach Anspruch 24, ferner umfassend eine fünfte Halbleitervorrichtung (D5), wobei das Eingangsleistungszufuhrende des mechanischen Schalters (K1, K2, K3) mit einer Batterie (BT) verbunden ist, und die Batterie (BT) mit einem mechanischen Ladeschalter (K5) verbunden ist; die Vorrichtung beim Unterbrechen des mechanischen Ladeschalters (K5) dazu konfiguriert ist, dass der Kondensator (C1) durch den vierten Halbleiterschalter (SCR4) und die fünfte Halbleitervorrichtung (D5) und die Batterie (BT) zum Unterbrechen des Lichtbogenlöschens des mechanischen Ladeschalters (K5) entladen wird, und die fünfte Halbleitervorrichtung (D5) entweder eine fünfte Diode (D5) oder ein mit der Steuereinheit (C) verbundener fünfter unidirektionaler Thyristor ist.

27. Gleichstrom-Lichtbogenlöschvorrichtung nach Anspruch 24, wobei ein Spannungssignal eines gemeinsamen Anschlusses der zweiten Reihenschaltung, der Ladeschalter und die Leistungshalbleitervorrichtung (SCR1, SCR2, SCR3) mit der Steuereinheit (C) verbunden sind.

28. Gleichstrom-Lichtbogenlöschvorrichtung nach Anspruch 21, die zum Übertragen des Steuersignals des mechanischen Schalters (K1, K2, K3) an die Steuereinheit (C) oder Übertragen des Steuersignals der Steuereinheit (C) an den mechanischen Schalter (K1, K2, K3) konfiguriert ist.

29. Gleichstrom-Lichtbogenlöschvorrichtung nach Anspruch 21, wobei die Steuereinheit (C) zum Steuern der Leistungshalbleitervorrichtung (SCR1, SCR2, SCR3), dass sie sich einschaltet, wenn die Steuereinheit (C) im ausgeschalteten Zustand des mechanischen Schalters (K1, K2, K3) eine Lichtbogenbildung erfasst, konfiguriert ist.

30. Gleichstrom-Lichtbogenlöschvorrichtung nach Anspruch 21, ferner umfassend einen fünften unidirektionalen Thyristor, wobei der fünfte unidirektionale Thyristor mit der Steuereinheit (C) verbunden ist; das Eingangsleistungszufuhrende des mechanischen Schalters (K1, K2, K3) mit einer Batterie (BT) verbunden ist; die Batterie (BT) mit einem mechanischen Ladeschalter (K5) verbunden ist; und beim Unterbrechen des mechanischen Ladeschalters (K5) der Kondensator (C1) durch die Batterie (BT) und den fünften unidirektionalen Thyristor, der zum Unterbrechen des Lichtbogenlöschens des mechanischen Ladeschalters (K5) verwendet wird, entladen wird.

31. Gleichstrom-Lichtbogenlöschvorrichtung nach Anspruch 21, wobei die Anzahl an mechanischen Schaltern (K1, K2, K3) mindestens zwei beträgt, einschließlich eines ersten mechanischen Schalters (K1) und eines zweiten mechanischen Schalters (K2); die Anzahl der Lasten (RL1, RL2, RL3) mindestens zwei beträgt, einschließlich einer ersten Last (RL1) und einer zweiten Last (RL2); die Anzahl der Leistungshalbleitervorrichtungen (SCR1, SCR2, SCR3) mindestens zwei beträgt, einschließlich einer ersten Leistungshalbleitervorrichtung (SCR1) und einer zweiten Leistungshalbleitervorrichtung (SCR2).

32. Gleichstrom-Lichtbogenlöschvorrichtung nach Anspruch 1, die beim Unterbrechen des mechanischen Schalters (K1, K2, K3) dazu konfiguriert ist, dass die Steuereinheit (C) erfasst, dass der Kontakt des mechanischen Schalters (K1, K2, K3) unterbrochen ist, und die Leistungshalbleitervorrichtung (SCR1, SCR2, SCR3) so steuert, dass sie sich mit Verzögerung, die mehr als 100 Mikrosekunden beträgt, einschaltet; die Steuereinheit (C) mit dem Strom der Last (RL1, RL2, RL3) verbundene Parameter speichert oder mit dem Strom der Last (RL1, RL2, RL3) verbundene Parameter empfängt; und beim Unterbrechen des mechanischen Schalters (K1, K2, K3) gilt, je größer der Strom der Last (RL1, RL2, RL3), desto länger die Verzögerungszeit.

## Revendications

1. Appareil d'extinction d'arc à courant continu, dans lequel un commutateur mécanique (K1, K2, K3) nécessaire pour l'extinction d'arc est connecté en série à une charge (RL1, RL2, RL3), comprenant un commutateur de détection de tension (A) et un condensateur (C1), le commutateur de détection de tension (A) étant connecté au condensateur (C1) en formant un circuit en série, le circuit en série étant connecté à un nœud de connexion du commutateur mécanique (K1, K2, K3) et de la charge (RL1, RL2, RL3) ; dans lequel, lors de l'actionnement du commutateur mécanique (K1, K2, K3), le condensateur (C1) forme une boucle de décharge par le commutateur de détection de tension (A) et la charge (RL1, RL2, RL3) et est utilisé pour couper l'extinction d'arc du commutateur mécanique (K1, K2, K3), **caractérisé en ce que** le commutateur de détection de tension (A) comprend une unité de commande (C) et un dispositif semiconducteur de puissance (SCR1, SCR2, SCR3) ; l'unité de commande (C) est connecté au nœud de connexion, un signal de tension du nœud de connexion étant transmis à l'unité de commande (C) ; le dispositif semiconducteur de puissance (SCR1, SCR2, SCR3) est connecté à l'unité de commande (C) ; lors de l'actionnement du commutateur mécanique (K1, K2, K3), le dispositif semiconducteur de puissance (SCR1, SCR2, SCR3) est activé, et le condensateur (C1) est déchargé par le dispositif semiconducteur de puissance (SCR1, SCR2, SCR3) et la charge (RL1, RL2, RL3).

2. Appareil d'extinction d'arc à courant continu selon la revendication 1, dans lequel le commutateur de détection de tension (A) est configuré pour une activation dans un intervalle dans lequel la différence de potentiel à travers le commutateur mécanique (K1, K2, K3) est supérieure à 5V et inférieure à la tension de service du commutateur mécanique (K1, K2, K3).

3. Appareil d'extinction d'arc à courant continu selon la revendication 2, dans lequel le commutateur de détection de tension (A) est un commutateur semi-commandé.

4. Appareil d'extinction d'arc à courant continu selon la revendication 3, dans lequel le commutateur de détection de tension (A) est un circuit à deux extrémités.

5. Appareil d'extinction d'arc à courant continu selon la revendication 3, dans lequel le commutateur semi-commandé comprend un thyristor (TR1, SCR1), soit la grille du thyristor (TR1, SCR1) est connectée à l'anode du thyristor (TR1, SCR1), soit la grille du thyristor (TR1, SCR1) est connectée à la deuxième anode du thyristor (TR1, SCR1).

6. Appareil d'extinction d'arc à courant continu selon la revendication 5, comprenant en outre un premier dispositif semiconducteur (Z1), dans lequel une tension de fermeture du premier dispositif semiconducteur (Z1) est supérieure à 3V et la grille du thyristor (TR1, SCR1) est connectée soit à l'anode ou à la deuxième anode par le premier dispositif semiconducteur (Z1).

7. Appareil d'extinction d'arc à courant continu selon la revendication 6, dans lequel le premier dispositif semiconducteur (Z1) est une diode Zener, un suppresseur de tension transitoire, une diode à déclenchement ou une varistance.

8. Appareil d'extinction d'arc à courant continu selon la revendication 7, comprenant en outre une deuxième diode (D2), dans lequel la deuxième diode (D2), le premier dispositif semiconducteur (Z1) et la grille du thyristor (TR1, SCR1) sont connectés en série.

9. Appareil d'extinction d'arc à courant continu selon la revendication 3, dans lequel le port de détection du commutateur de détection de tension (A) et le port de sortie du commutateur de détection de tension (A) ne sont pas isolés l'un de l'autre.

10. Appareil d'extinction d'arc à courant continu selon la revendication 3, dans lequel le commutateur de détection de tension (A) est un commutateur semiconducteur temporisé.

11. Appareil d'extinction d'arc à courant continu selon la revendication 3, dans lequel le commutateur semi-commandé est conditionné comme un dispositif avec un matériau isolant.

12. Appareil d'extinction d'arc à courant continu selon la revendication 3, dans lequel le commutateur semi-commandé est conditionné comme un dispositif avec un matériau isolant et une unité de charge (B) pour la charge du condensateur (C1).

13. Appareil d'extinction d'arc à courant continu selon la revendication 1, configuré de telle façon que lors de l'actionnement du commutateur mécanique (K1, K2, K3), l'unité de commande (C) détecte que le contact du commutateur mécanique (K1, K2,K3) est coupé, et le dispositif semiconducteur de puissance (SCR1, SCR2, SCR3) est commandé pour être activé avec une temporisation supérieure à 100 microsecondes.

14. Appareil d'extinction d'arc à courant continu selon la revendication 1, dans lequel l'unité de commande (C) est configurée pour effectuer une acquisition A/N sur le signal de tension.

15. Appareil d'extinction d'arc à courant continu selon la revendication 14, comprenant en outre une unité de charge (B) pour la charge du condensateur (C1), l'unité de charge (B) étant connectée en parallèle avec le dispositif semiconducteur de puissance (SCR1, SCR2, SCR3), le nœud de connexion charge le condensateur (C1) par le biais de l'unité de charge (B), et le signal de tension est la tension de la charge (RL1, RL2, RL3).

16. Appareil d'extinction d'arc à courant continu selon la revendication 15, dans lequel l'unité de charge (B) comprend une première diode (D1) et un premier élément de limitation de courant (R1) connectés en série, et le signal de tension du condensateur (C1) est transmis à l'unité de commande (C) pour la détection de la capacité du condensateur (C1).

17. Appareil d'extinction d'arc à courant continu selon la revendication 1, dans lequel le signal de tension est la tension de la charge (RL1, RL2, RL3), ou la tension relative à l'autre port du dispositif semiconducteur de puissance (SCR1, SCR2, SCR3), ou la tension relative à l'entrée de puissance du commutateur mécanique (K1, K2, K3).

18. Appareil d'extinction d'arc à courant continu selon la revendication 1, configuré soit pour transmettre le signal de commande du commutateur mécanique (K1, K2, K3) à l'unité de commande (C), soit pour transmettre le signal de commande de l'unité de commande (C) au commutateur mécanique (K1, K2, K3).

19. Appareil d'extinction d'arc à courant continu selon la revendication 1, dans lequel l'unité de commande (C) stocke un programme de commande adaptatif, et est configurée pour optimiser un paramètre de commande d'extinction d'arc à l'aide de changements du signal de tension.

20. Appareil d'extinction d'arc à courant continu selon la revendication 1, dans lequel le nombre de commutateurs mécaniques (K1, K2, K3) s'élève au moins à deux, dont un premier commutateur mécanique (K1) et un deuxième commutateur mécanique (K2) ; le nombre de charges (RL1, RL2, RL3) s'élève au moins à deux, dont une première charge (RL1) et une deuxième charge (RL2) ; le nombre de dispositifs semiconducteurs de puissance (SCR1, SCR2, SCR3) s'élève au moins à deux, dont un premier dispositif semiconducteur de puissance (SCR1) et un deuxième dispositif semiconducteur de puissance (SCR2).

21. Appareil d'extinction d'arc à courant continu selon la revendication 1, dans lequel l'unité de charge (B) comprend au moins un commutateur de charge, et un signal de commande de l'unité de commande (C) est transmis au commutateur de charge.

22. Appareil d'extinction d'arc à courant continu selon la revendication 21, dans lequel l'alimentation en puissance de boucle principale du commutateur mécanique (K1, K2, K3) est configurée pour le chargement du condensateur (C1) par le biais du commutateur de charge.

23. Appareil d'extinction d'arc à courant continu selon la revendication 21, configuré de telle façon que lors de la fermeture du commutateur mécanique (K1, K2, K3), l'unité de commande (C) commande le commutateur de charge et le dispositif semiconducteur de puissance (SCR1, SCR2, SCR3) de manière à les activer, puis le commutateur mécanique (K1, K2, K3) est fermé; et lors de l'actionnement du commutateur mécanique (K1, K2, K3), le commutateur de charge est dans un état coupé.

24. Appareil d'extinction d'arc à courant continu selon la revendication 21, comprenant en outre un quatrième commutateur semiconducteur ; le port de commande du quatrième commutateur semiconducteur est connecté à l'unité de commande (C) ; le condensateur (C1) et le quatrième commutateur semiconducteur forment un deuxième circuit en série ; et le condensateur (C1) forme une boucle de décharge par le quatrième commutateur semiconducteur, le dispositif semiconducteur de puissance (SCR1, SCR2, SCR3) et la charge (RL1, RL2, RL3).

25. Appareil d'extinction d'arc à courant continu selon la revendication 24, comprenant en outre une troisième diode, dans lequel l'alimentation en puissance de boucle principale du commutateur mécanique (K1, K2, K3) est configurée pour charger le condensateur (C1) par le biais du commutateur de charge et de la troisième diode.

26. Appareil d'extinction d'arc à courant continu selon la revendication 24, comprenant en outre un cinquième dispositif semiconducteur (D5), dans lequel l'extrémité d'alimentation de puissance d'entrée du commutateur mécanique (K1, K2, K3) est connectée à une batterie (BT), et la batterie (BT) est connectée à un commutateur mécanique de charge (K5) ; l'appareil étant configuré de telle façon que lors de l'actionnement du commutateur mécanique de charge (K5), le condensateur (C1) est déchargé par le quatrième commutateur semiconducteur (SCR4) et le cinquième dispositif semiconducteur (D5), et la batterie (BT) pour la coupure de l'extinction d'arc du commutateur de charge (K5), et le cinquième dispositif semiconducteur (D5) est soit une cinquième diode (D5), soit un cinquième thyristor unidirectionnel connecté à l'unité de commande (C).

27. Appareil d'extinction d'arc à courant continu selon la revendication 24, dans lequel un signal de tension d'un terminal commun du deuxième circuit en série, du commutateur de charge et du dispositif semiconducteur de puissance (SCR1, SCR2, SCR3) est connecté à l'unité de commande (C).

28. Appareil d'extinction d'arc à courant continu selon la revendication 21, configuré pour transmettre le signal de commande du commutateur mécanique (K1, K2, K3) à l'unité de commande (C), ou pour transmettre le signal de commande de l'unité de commande (C) au commutateur mécanique (K1, K2, K3).

29. Appareil d'extinction d'arc à courant continu selon la revendication 21, dans lequel l'unité de commande (C) est configurée pour commander le dispositif semiconducteur de puissance (SCR1, SCR2, SCR3) de manière à l'activer lorsque l'unité de commande (C) détecte la formation d'un arc dans l'état éteint du commutateur mécanique (K1, K2, K3).

30. Appareil d'extinction d'arc à courant continu selon la revendication 21, comprenant en outre un cinquième thyristor unidirectionnel, dans lequel le cinquième thyristor unidirectionnel est connecté à l'unité de commande (C) ; l'extrémité d'alimentation de puissance d'entrée du commutateur mécanique (K1, K2, K3) est connectée à une batterie (BT) ; la batterie (BT) est connectée à un commutateur mécanique de charge (K5) ; et lors de l'actionnement du commutateur mécanique de charge (K5), le condensateur (C1) est déchargé par la batterie (BT) et le cinquième thyristor unidirectionnel, lequel est utilisé pour couper l'extinction d'arc du commutateur mécanique de charge (K5).

31. Appareil d'extinction d'arc à courant continu selon la revendication 21, dans lequel le nombre de commutateurs mécaniques (K1, K2, K3) s'élève au moins à deux, dont un premier commutateur mécanique (K1) et un deuxième commutateur mécanique (K2) ; le nombre de charges (RL1, RL2, RL3) s'élève au moins à deux, dont une première charge (RL1) et une deuxième charge (RL2) ; le nombre de dispositifs semiconducteurs de puissance (SCR1, SCR2, SCR3) s'élève au moins à deux, dont un premier dispositif semiconducteur de puissance (SCR1) et un deuxième dispositif semiconducteur de puissance (SCR2).

32. Appareil d'extinction d'arc à courant continu selon la revendication 1, configuré de telle façon que lors de l'actionnement du commutateur mécanique (K1, K2, K3), l'unité de commande (C) détecte que le contact du commutateur mécanique (K1, K2, K3) est coupé, et commande le dispositif semiconducteur de puissance (SCR1, SCR2, SCR3) de manière à l'activer avec une temporisation supérieure à 100 microsecondes ; l'unité de commande (C) stocke des paramètres relatifs au courant de la charge (RL1, RL2, RL3) ou reçoit des paramètres relatifs au courant de la charge (RL1, RL2, RL3) ; et lors de l'actionnement du commutateur mécanique (K1, K2, K3), plus le courant de la charge (RL1, RL2, RL3) est élevé, plus la temporisation est longue.
